# EUROPEAN PATENT APPLICATION

(11) **EP 4 807 243 A1**
(43) Date of publication of application: **16.09.2026**
(21) Application number: 25209674.8
(22) Date of filing: 20.10.2025
(51) Int. Cl.: F21V 14/02, F21V 21/30, F21V 29/58, F21W 131/406

(54) **MULTI-PURPOSE ELECTRICAL FOCUSING SPOTLIGHT LAMP**

(30) Priority: 12.03.2025 CN 202510286518
(71) Applicant: Beijing Chengjia Electronic Technology Co., Ltd., Beijing 101300 (CN)
(72) Inventor: DONG, Hongyu, Beijing, 101300 (CN)
(74) Representative: Gleim Petri Patent- und Rechtsanwaltspartnerschaft mbB

(57) **Abstract**

A multi-purpose electrical focusing spotlight lamp, including a main body (1); a hoisting lamp truss (2) connected to a side of the main body (1); a base (3) disposed at a bottom of the main body (1), where a liquid cooling station (31), a driving system (32) for a light source (5), and a liquid cooling exhaust fan (33) are located below the main body (1) and are installed in the base (3); an electrical focusing mechanism (4) located in the main body (1), where the light source (5) is installed on the electrical focusing mechanism (4); a reflector cup (6) fastened in the main body (1), and reflects light emitted by the light source (5); a rotating mechanism (7) disposed below and connected to the electrical focusing mechanism (4), and rotates the electrical focusing mechanism (4) to switch between high and low color temperatures; and glass (8) fastened to a side of the main body (1) away from the reflector cup (6) and symmetrical with the reflector cup.

## Description

### TECHNICAL FIELD

The present disclosure relates to the technical field of lamps, and specifically refers to a multi-purpose electrical focusing spotlight lamp.

### BACKGROUND

Currently, if large area and high-illumination lighting is required for an existing LED film and television lighting lamp, a plurality of LED lighting lamps must be hoisted on a truss, and simultaneously illuminated to a photographed object. However, such hoisting presents the following disadvantages.
1. Hoisting is inconvenient. A truss is selected first for each hoisting, and the quantity and weight of hoisted lamps also need to be calculated. In addition, a large amount of manpower, material resources, and financial costs are wasted during disassembly and assembly of the lamp in use every time.
2. The lamp cannot be focused. A beam tube at a fixed angle needs to be selected and replaced after being used every time to change an illumination area of the lamp.

In addition, since multiple individual lamps are hoisted on the truss rather than a single light source, a problem of ghosting becomes particularly pronounced.

### SUMMARY

The present disclosure aims to at least solve a problem that an LED film and television lighting lamp cannot be focused after being hoisted and a double image problem since multiple single-light-source and low-power lamps are used.

To solve the foregoing technical problem, the technical solution adopted by the present disclosure is as follows. A multi-purpose electrical focusing spotlight lamp proposed by the present disclosure includes a main body for installing a lamp; a hoisting lamp truss connected to a lateral side of the main body; a base disposed at a bottom of the main body, where a liquid cooling station, a driving system for a light source, and a liquid cooling exhaust fan are located below the main body and are installed in the base, respectively; and where the multi-purpose electrically focusing spotlight lamp further includes:
an electrical focusing mechanism located in the main body, where the light source is installed on the electrical focusing mechanism, the light source having a light emitting angle of 120° and being configured to emit different color temperature light, and where the light source performs focusing by adjusting a distance via the electrical focusing mechanism;
a reflector cup fastened in the main body, configured to reflect the color temperature light emitted by the light source;
a rotating mechanism disposed below and connected to the electrical focusing mechanism, configured to rotate the electrical focusing mechanism by 180° to switch between high and low color temperatures; and
glass fastened to a side of the main body away from the reflector cup and symmetrical with the reflector cup, configured to protect the light source.

As a first preferred embodiment, the electrical focusing mechanism includes two focusing sliding rods fastened in the base; a focusing screw disposed between and parallel to the two focusing sliding rods, configured to be rotatable on the base; a focusing sliding block threadedly engaged with the focusing screw, configured to be slidably connected to the focusing sliding rods; a rotating support passing through and rotatably mounted in the focusing sliding block, configured to be connected to the rotating mechanism, where the light source is disposed on a top end of the rotating support; and a focusing motor connected to a tail end of the focusing screw.

As a second preferred embodiment, the rotating mechanism includes a first gear disposed below the focusing sliding block, configured to be connect to the rotating support; a rotating motor disposed below the focusing sliding block; a second gear disposed on an output shaft of the rotating motor; and a rotating belt wound between the first gear and the second gear.

As a third preferred embodiment, the light source includes a lamp panel radiator fastened to the rotating support; a color temperature lamp panel assembly installed on the lamp panel radiator, where the color temperature lamp panel assembly includes protective covers fastened to both sides of the lamp panel radiator, and color temperature lamp panels positioned by the protective covers and installed on the lamp panel radiator. The protective cover can protect the color temperature lamp panel, and different optical glass can be installed on the protective cover to obtain different light effects.

As a fourth preferred embodiment, a check ring and a rear cover are disposed on front and rear ends of the main body, respectively, the glass is located on the check ring; and a colored paper jaw extends from a circumferential surface close to the check ring.

As a fifth preferred embodiment, the light source driving system is electrically connected to the liquid cooling exhaust fan, the light source, the focusing motor, and the rotating motor, respectively.

As a sixth preferred embodiment, the focusing sliding block further includes a cooling fan configured to provide cooling.

By adopting the aforementioned structure, the present disclosure has the following beneficial effects.
1. The light source is placed in front of a specially designed reflector cup, and 100% of light emitted by the light source is reflected out through the reflector cup. Light efficiency is higher than 50% of that of a traditional design. The same power may obtain brighter illumination.
2. At the same time, the lamp of the present disclosure has an electrical focusing function. Engineers can perform focusing operations from the ground by controlling the electrical focusing mechanism iafter the lamp is hoisted. In this way, light required by the scenario can be easily obtained. The design of the present disclosure is different from a conventional design that focusing is performed by using a Fresnel lens, because light attenuation of the Fresnel lens reaches 30%-50%, and the design the present disclosure reduces the light attenuation to 5%-10%.
3. In addition, by using the rotating mechanism, the high and low color temperatures can be switched while the brightness is improved.
4. The liquid cooling station of the present disclosure solve a highly concentrated heat dissipation problem, so that the power of the light source can be increased and decreased.

### BRIEF DESCRIPTION OF THE DRAWINGS

FIG. 1 is an overall structural schematic diagram of the present disclosure;
FIG. 2 is a schematic diagram inside a base;

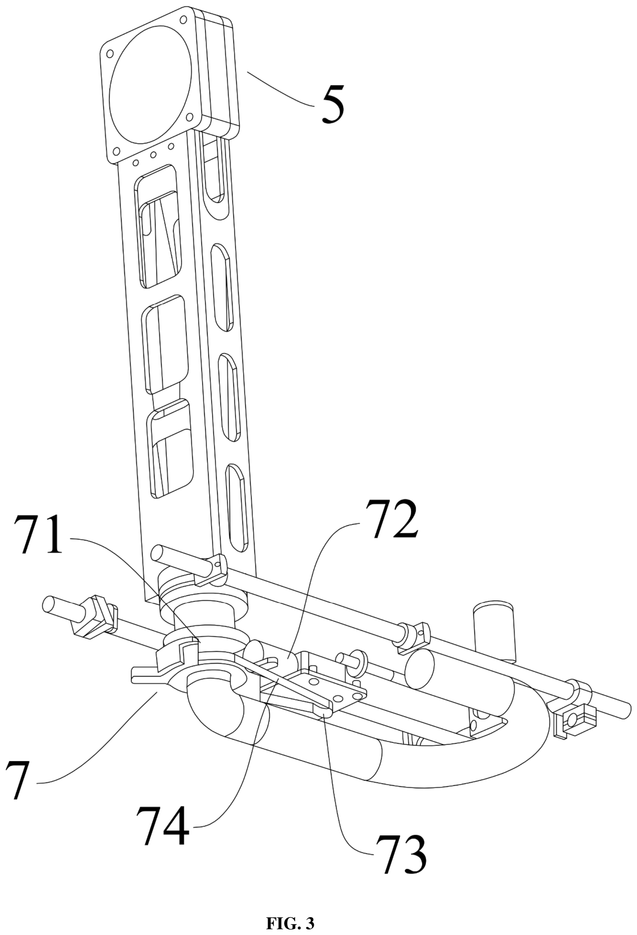

FIG. 3 is a structural schematic diagram of a rotating mechanism;
FIG. 4 is a partial view according to the present disclosure;
FIG. 5 is a constitutional diagram of an electrical focusing mechanism and a light source;
FIG. 6 is an optical schematic diagram of high and low color temperature switching; and
FIG. 7 is an explosive view of a color temperature lamp panel assembly.

Reference numerals: 1: main body; 11: check ring; 12: rear cover; 13: colored paper jaw; 2: lamp truss; 3: base; 31: liquid cooling station; 32: light source driving system; 33: liquid cooling exhaust fan; 4: electrical focusing mechanism; 41: focusing sliding rod; 42: focusing screw; 43: focusing sliding block; 431: cooling fan; 44: rotating support; 45: focusing motor; 5: light source; 51: lamp panel radiator; 52: color temperature lamp panel assembly; 521: protective cover; 522: color temperature lamp panel; 6: reflector cup; 7: rotating mechanism; 71: first gear; 72: rotating motor; 73: second gear; 74: rotating belt; and 8: glass.

### DETAILED DESCRIPTION OF THE EMBODIMENTS

The following clearly and completely describes the technical scheme in the embodiments of the present disclosure with reference to the drawings in the embodiments of the present disclosure. Apparently, the described embodiments are merely a part rather than all of the embodiments of the present disclosure. All other embodiments obtained by those skilled in the art based on the embodiments of the present disclosure without creative efforts shall fall within the protection scope of the present disclosure.

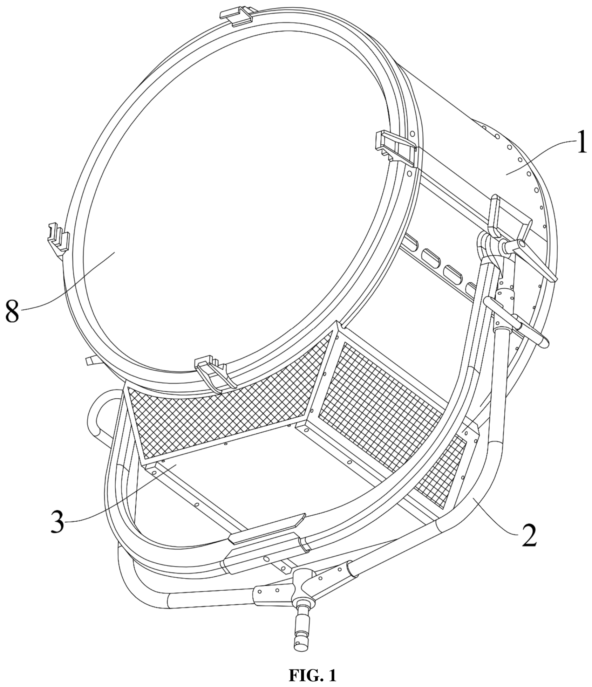

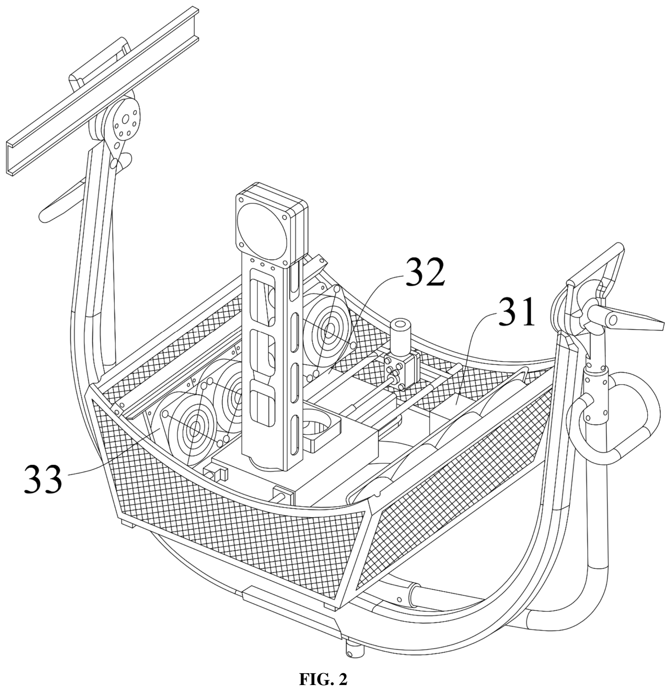

Refer to FIG. 1, FIG. 2, and FIG. 4.

A multi-purpose electrical focusing spotlight lamp includes a main body 1 for installing a lamp, where, a check ring 11 and a rear cover 12 are disposed on front and rear ends of the main body 1, respectively; a hoisting light truss 2 connected to a lateral side of the main body 1; and a base 3 disposed at a bottom of the main body 1, where a liquid cooling station 31, a driving system 32 for a light source, and a liquid cooling exhaust fan 33 are located below the main body and are installed in the main body, respectively. The multi-purpose electrically focusing spotlight lamp further includes: an electrical focusing mechanism 4 located in the main body 1, where the light source 5 is installed on the electrical focusing mechanism 4, the light source 5 having a light emitting angle of 120°, and being configured to emit different light, and where the light source 5 performs focusing by adjusting a distance via the electrical focusing mechanism 4; a reflector cup 6 fastened in the main body 1, configured to reflect the light emitted by the light source 5, where reflectivity of the reflector cup 6 is greater than 90%, and a mixing effect is performed on light in a reflection process of the reflector cup 6, so the light reflected by the reflector cup is relatively uniform and brighter, light effect of the reflector cup 6 compared with that of a conventional diffuse reflection reflector cup is improved by more than 50%, and the driving system 32 for the light source is electrically connected to the liquid cooling exhaust fan 33 and the light source 5; a rotating mechanism 7 disposed below and connected to the electrical focusing mechanism 4, configured to rotate the electrical focusing mechanism 4 by 180° to switch between high and low color temperatures; and glass 8 fastened to a side of the main body 1 away from the reflector cup 6 and symmetrical with the reflector cup 6, configured to play protective, dustproof and waterproof roles on the light source 5, where the glass 8 is located on the check ring 11, and a colored paper jaw 13 extends from a circumferential surface close to the check ring 11.

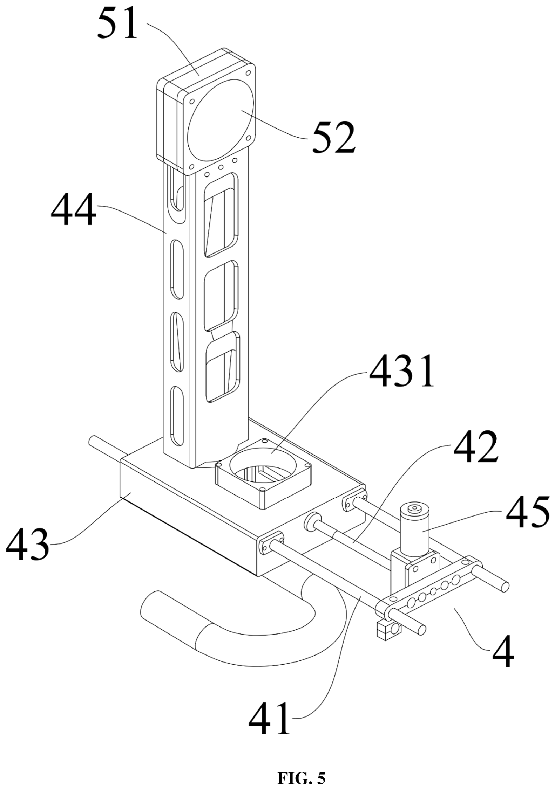

Refer to FIG. 5.

The electrical focusing mechanism 4 includes two focusing sliding rods 41 fastened in the base 3; A focusing screw 42 disposed between and parallel to the two focusing sliding rods 41, configured to be rotatable on the base 3; a focusing sliding block 43 threadedly engaged with the focusing screw 42, configured to be slidably connected to the focusing sliding rods 41; A rotating support 44 passing through and rotatably mounted in the focusing sliding block 43, configured to be connected to the rotating mechanism 7, where the light source 5 is disposed on a top end of the rotating support 44; and a focusing motor 45 connected to a tail end of the focusing screw 42. The focusing sliding block 43 further includes a cooling fan 431 configured to provide cooling.

The focusing motor 45 drives the focusing screw 42 to rotate on the base 3, and spirally drives the focusing sliding block 43 to move on the focusing sliding rod 41, so as to change a distance between the light source 5 and the reflector cup 6, thereby implementing focusing adjustment.

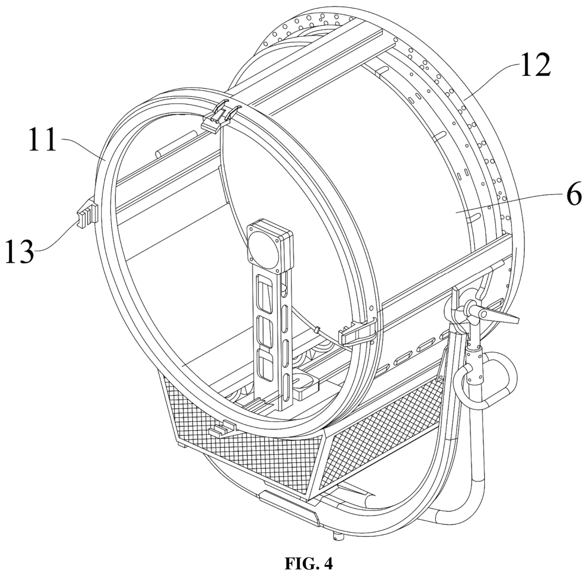

Refer to FIG. 4.

The rotating mechanism 7 includes a first gear 71 disposed below the focusing sliding block 43, configured to be connect to the rotating support 44; a rotating motor 72 disposed below the focusing sliding block 43, where the driving system 32 for the light source is electrically connected to the focusing motor 45 and the rotating motor 72; a second gear 73 disposed on an output shaft of the rotating motor 72; and rotating belt 74 wound between the first gear 71 and the second gear 73.

The rotating motor 72 drives the first gear 71, the second gear 73, and the rotating belt 74 to work, so that the rotating support 44 performs 180° rotation, thereby switching the conversion of the light source 5.

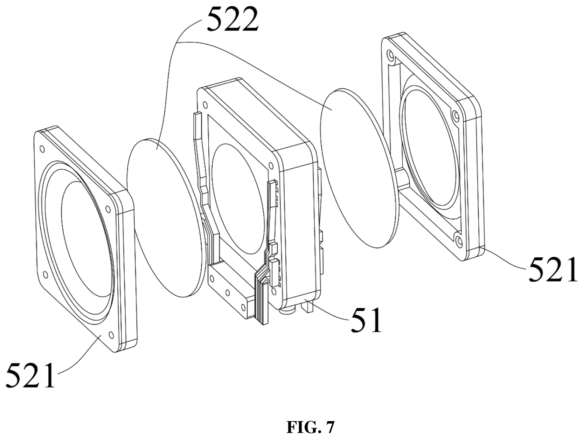

Refer to FIG. 5 to FIG. 7.

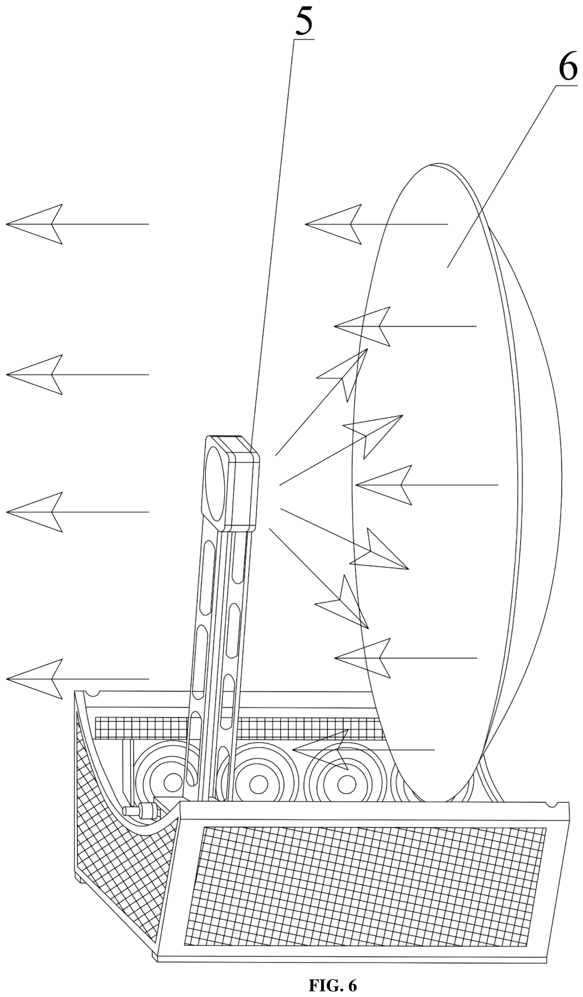

The light source 5 includes a lamp panel radiator 51 fastened to the rotating support 44. A color temperature lamp panel assembly 52 installed on the lamp panel radiator 51, where the color temperature lamp panel assembly 52 includes protective covers 521 fastened to both sides of the lamp panel radiator 51 and color temperature lamp panels 522 positioned by the protective covers 521 and installed on the lamp panel radiator 51. The protective cover 521 can protect the color temperature lamp panel 522, and different optical glass can be installed on the protective cover 521 to obtain different light effects. Light sources of the color temperature lamp panels 522 are light sources with different brightnesses, different functions, and different powers. These light sources may be selected based on requirements of customers, and are divided into three types in total:
(1) The color temperature lamp panels 522 includes a low-color-temperature lamp panel and a high-color-temperature lamp panel installed on the lamp panel radiator 51. After the rotating support 44 rotates, the color temperature lamp panels 522 are overturned by 180° to implement conversion of a low-color-temperature lamp and a high-color-temperature lamp. A reflection principle thereof is shown in FIG. 6.
(2) The color temperature lamp panels 522 are four-color, five-color, six-color, or seven-color lamp panels installed on the lamp panel radiator 51.
(3) The color temperature lamp panels 522 are double-color lamp panels installed on the lamp panel radiator 51.

Although the embodiments of the present disclosure have already been illustrated and described, various changes, modifications, replacements and transformations can be made by those skilled in the art under the condition of without departing from the principle and the spirit of the present disclosure, and thus the scope of the present disclosure should be restricted by claims and equivalents thereof.

The present disclosure and the embodiment thereof are described above, the description is not limited, only one of the embodiments of the present disclosure is shown in the attached figures, and the actual structure is not limited in this way. In conclusion, if any person skilled in the art is inspired by the technical scheme, the structural mode and the embodiment similar to those of the technical scheme are not creatively designed under the condition of without departing from the creation purpose of the present disclosure, and the structural mode and the embodiment belong to the protection range of the present disclosure.

## Claims

1. A multi-purpose electrical focusing spotlight lamp, comprising
a main body (1) for installing a lamp;
a hoisting lamp truss (2) connected to a lateral side of the main body (1);
a base (3) disposed at a bottom of the main body (1), wherein a liquid cooling station (31), a driving system (32) for a light source (5), and a liquid cooling exhaust fan (33) are located below the main body (1) and are installed in the base (3), respectively; and
wherein the multi-purpose electrically focusing spotlight lamp further comprises:
an electrical focusing mechanism (4) located in the main body (1), wherein the light source (5) is installed on the electrical focusing mechanism (4), the light source (5) having a light emitting angle of 120° and being configured to emit different color temperature light, and wherein the light source (5) performs focusing by adjusting a distance via the electrical focusing mechanism (4);
a reflector cup (6) fastened in the main body (1), configured to reflect the color temperature light emitted by the light source (5);
a rotating mechanism (7) disposed below and connected to the electrical focusing mechanism (4), configured to rotate the electrical focusing mechanism (4) by 180° to switch between high and low color temperatures; and
glass (8) fastened to a side of the main body (1) away from the reflector cup (6) and symmetrical with the reflector cup (6), configured to protect the light source (5).

2. The multi-purpose electrical focusing spotlight lamp according to claim 1, wherein the electrical focusing mechanism (4) comprises
two focusing sliding rods (41) fastened in the base (3);
a focusing screw (42) disposed between and parallel to the two focusing sliding rods (41), configured to be rotatable on the base (3);
a focusing sliding block (43) threadedly engaged with the focusing screw (42), configured to be slidably connected to the focusing sliding rods (41);
a rotating support (44) passing through and rotatably mounted in the focusing sliding block (43), configured to be connected to the rotating mechanism (7), wherein the light source (5) is disposed on a top end of the rotating support (44); and
a focusing motor (45) connected to a tail end of the focusing screw (42).

3. The multi-purpose electrical focusing spotlight lamp according to claim 2, wherein the rotating mechanism (7) comprises
a first gear (71) disposed below the focusing sliding block (43), configured to be connect to the rotating support (44);
a rotating motor (72) disposed below the focusing sliding block (43);
a second gear (73) disposed on an output shaft of the rotating motor (72); and
a rotating belt (74) wound between the first gear (71) and the second gear (73).

4. The multi-purpose electrical focusing spotlight lamp according to claim 2, wherein the light source (5) comprises
a lamp panel radiator (51) fastened to the rotating support (44);
a color temperature lamp panel assembly (52) installed on the lamp panel radiator (51), wherein the color temperature lamp panel assembly (52) comprises protective covers (521) fastened to both sides of the lamp panel radiator (51), and color temperature lamp panels (522) positioned by the protective covers (521) and installed on the lamp panel radiator (51).

5. The multi-purpose electrical focusing spotlight lamp according to claim 1, wherein a check ring (11) and a rear cover (12) are disposed on front and rear ends of the main body (1), respectively, the glass (8) is located on the check ring (11); and
a colored paper jaw (13) extends from a circumferential surface close to the check ring (11).

6. The multi-purpose electrical focusing spotlight lamp according to claim 3, wherein the light source (5) driving system (32) is electrically connected to the liquid cooling exhaust fan (33), the light source (5), the focusing motor (45), and the rotating motor (72), respectively.

7. The multi-purpose electrical focusing spotlight lamp according to claim 2, wherein the focusing sliding block (43) further comprises a cooling fan (431) configured to provide cooling.
